# EUROPÄISCHE PATENTANMELDUNG

(11) **EP 0 593 961 A1**
(43) Veröffentlichungstag der Anmeldung: **27.04.1994**
(21) Anmeldenummer: 93115883.6
(22) Anmeldetag: 01.10.1993
(51) Int. Cl.: B23K 26/06, G02B 26/04

(54) **Optischer Strahlteiler, insbesondere für einen Laserstrahl**

(30) Priorität: 19.10.1992 DE 4235165
(71) Anmelder: Thyssen Stahl Aktiengesellschaft, D-47166 Duisburg (DE)
(72) Erfinder: Sturm, Joseph, Ing., D-47179 Duisburg (DE)
(74) Vertreter: Cohausz & Florack

(57) **Zusammenfassung**

Die Erfindung bezieht sich auf einen optischen Strahlteiler, der einen Strahl (A), insbesondere einen Laserstrahl, in mindestens zwei Strahlen (B,C) aufteilt, die sich von dem Ursprungstrahl (A) nur in der Intensität unterscheiden. Dazu weist der Strahlteiler einen im Strahlengang des Strahles (A) angeordneten Ablenkspiegel (2) auf, der um eine senkrecht zur Spiegelebene liegende Achse rotiert und mindestens ein Fenster (2c) aufweist, das bei Drehung des Ablenkspiegels (2) den gesamten Querschnitt des Strahles (A) überstreicht.

## Beschreibung

Die Erfindung betrifft einen optischen Strahlteiler, insbesondere für einen Laserstrahl, mit einem im Strahlengang angeordneten, als Blende ausgebildeten Ablenkspiegel, der um eine senkrecht zu seiner Spiegelebene liegende Ebene drehbar ist und den Querschnitt des Strahls erfaßt.

Die vielseitigen Anwendungsmöglichkeiten von Laserstrahlen sind allgemein bekannt. Laserstrahlen eignen sich zum Beispiel für das Durchtrennen von Bändern, insbesondere Bändern aus Metall, im Durchlauf.

Dabei kommt es häufig vor, daß an den Bändern mehrere parallele Schnitte ausgeführt werden müssen, z.B. in Spaltanlagen oder an den Bandrändern die sogenannten Besäumschnitte. Um die Schnitte gleichzeitig ausführen zu können, werden in der Regel parallel geführte Laserstrahlen benötigt. Würde man dafür jeweils eine eigene Laserstrahlquelle einsetzen, wäre der Aufwand erheblich. Der Aufwand könnte verringert werden, wenn es gelänge, den Laserstrahl einer einzigen Laserstrahlquelle aufzuteilen. Von solchen Strahlteilern wird aber verlangt, daß der Querschnitt der Teilstrahlen im Vergleich zum ursprünglichen Querschnitt unverändert bleibt und die Energieverteilung über den Querschnitt möglichst gleichmäßig ist. Solche Strahlteiler, die diese Forderung erfüllen, stehen jedoch noch nicht für einen betrieblichen Einsatz zur Verfügung.

Bei einem bekannten Strahlteiler (DE 31 35 205 A1) für einen über einen Lichtleiter zugeführten Lichtstrahl kann in den Strahlengang des zugeführten Lichtstrahles ein Ablenkspiegel mehr oder weniger weit hinein bewegt werden. Ein entsprechend dem erfaßten Querschnitt des Lichtstrahles erfaßter Teil wird durch den Spiegel abgelenkt, während der übrige Teil ungehindert den Ablenkspiegel passiert. Im Ergebnis erhält man mit diesem Strahlteiler zwei Teilstrahlen, deren Querschnitte nur in der Summe dem Querschnitt des ursprünglichen Lichtstrahles entsprechen. Der Querschnitt der einzelnen Teilstrahlen ist somit kleiner als der Querschnitt des ursprünglichen Lichtstrahles. Mit dieser Art des Strahlteilers läßt sich also nicht die ursprüngliche Form des Lichtstrahles, d.h. die gleiche Querschnittsgröße mit einer gleichmäßigen Energieverteilung über den Querschnitt erhalten.

Bei einem anderen bekannten Strahlteiler der eingangs genannten Art (DE-PS 12 91 533) weist der Ablenkspiegel mindestens ein Fenster auf. Die Anordnung ist dabei so getroffen, daß der Ablenkspiegel entweder den vollen Strahl ablenkt oder bei fluchtendem Fenster den Strahl voll durchläßt. Das bedeutet, daß der Strahlempfänger in einer Phase die volle Strahlungsenergie und in den Pausen keine Strahlungsenergie erhält. Diese ungleiche Energieverteilung über die Zeit ist nicht optimal.

Der Erfindung liegt die Aufgabe zugrunde, einen Strahlteiler der eingangs genannten Art zu schaffen, der unter Beibehaltung der Form und der Größe des Querschnittes des aufzuteilenden Strahles eine gleichmäßige Energieverteilung über den Querschnitt der aufgeteilten Teilstrahlen gewährleistet.

Diese Aufgabe wird bei einem Strahlteiler der eingangs genannten Art dadurch gelöst, daß der Ablenkspiegel mindestens ein Fenster aufweist, das nur ein Segment des gesamten Querschnitts des Strahls überdeckt und das bei Drehung des Ablenkspiegels sämtliche Segmente des Strahls nacheinander überstreicht.

Bei der Erfindung überstreicht sowohl der von dem Ablenkspiegel erfaßte Teilstrahl als auch der durch das Fenster durchgelassene Teilstrahl bzw. die durch die Fenster durchgelassenen Teilstrahlen jeweils eine Fläche, die dem vollen bzw. gesamten Querschnitt des ursprünglichen Strahles entspricht. Dabei wird die Energie jedes Teilstrahles entsprechend der ursprünglichen Energieverteilung auf den gesamten Querschnitt gleichmäßig verteilt. Je schneller der Ablenkspiegel gedreht wird, desto besser ist die Qualität der Verteilung über die Fläche. Zusätzlich oder auch alternativ kann die Vergleichmäßigung der Beaufschlagung mit Strahlungsenergie dadurch verbessert werden, daß der Spiegel mehrere, insbesondere symmetrisch um die Drehachse herum verteilt angeordnete Spiegelflächen aufweist.

Die Intensität des ursprünglichen Licht- bzw. Laserstrahles wird bei einer Aufteilung in mehrere Teilstrahlen entsprechend dem Verhältnis der wirksamen Spiegelflächen aufgeteilt, z.B. bei einer Aufteilung in zwei Teilstrahlen mit einem Ablenkspiegel, dessen Spiegelfläche und Fensterfläche gleich groß sind, halbiert.

Eine gleichmäßige Energieverteilung läßt sich nach einer weiteren, einfachen Ausgestaltung der Erfindung dadurch erreichen, daß jede Spiegelfläche und jedes Fenster als ein von der Drehachse radial ausgehendes Segment ausgebildet ist.

Sofern der ursprüngliche Strahl in mehr als zwei Teilstrahlen aufgeteilt werden soll, läßt sich diese Forderung mit der Erfindung erfüllen, wenn im Strahlengang mindestens ein weiterer gleichartiger, synchron mit dem ersten Ablenkspiegel drehbarer Ablenkspiegel angeordnet ist, dessen Spiegelflache bzw. Spiegelflächen und dessen Fenster mit jedem im Strahlengang vorgeordneten Fenster fluchtet. Dabei kann der im Strahlengang angeordnete letzte Spiegel vollflächig und stationär ausgebildet sein.

Die Drehachse des Ablenkspiegels ist vorzugsweise unter einem Winkel von 45^{o} zur Achse des aufzuteilenden Strahles geneigt angeordnet, so daß einer der beiden Teilstrahlen unter einem Winkel von 90^{o} zur ursprünglichen Strahlrichtung abgelenkt wird.

Sofern erwünscht ist, daß die Teilstrahlen parallel zueinander verlaufen, kann das mit einem weiteren, parallel zum drehbaren Ablenkspiegel angeordneten Umlenkspiegel erreicht werden. Dieser kann entweder dem Ablenkspiegel nachgeordnet oder in Strahlrichtung hinter dem Ablenkspiegel angeordnet sein.

Im folgenden wird die Erfindung anhand einer Ausführungsbeispiele schematisch darstellenden Zeichnung näher erläutert. Im einzelnen zeigen:
- Figur 1: einen Strahlteiler mit einem drehbaren und einem stationären Ablenkspiegel im Axialschnitt,
- Figur 2: den drehbaren Ablenkspiegel des Strahlteilers nach Figur 1 in Ansicht in Strahlrichtung
**und**
- Figur 3: im Strahlengang hintereinander angeordnete Ablenkspiegel, davon zwei drehbewegliche Ablenkspiegel und ein stationärer Ablenkspiegel in schematischer Darstellung.

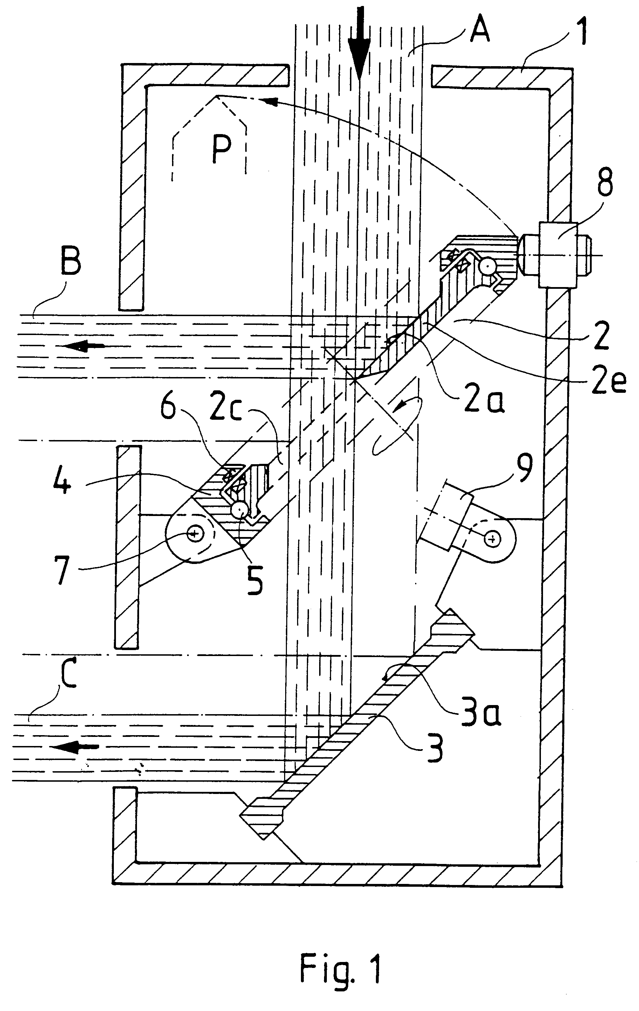

Der Strahlteiler für einen Laserstrahl A weist gemäß Figur 1 ein Gehäuse 1 auf, in dem im Strahlengang des Laserstrahls A zwei Ablenkspiegel 2,3 hintereinander angeordnet sind. Von diesen Ablenkspiegeln 2,3 ist der im Strahlengang letzte Ablenkspiegel 3 stationär angeordnet und weist eine vollflächige Spiegelfläche 3a auf, während der im Strahlengang erste Ablenkspiegel 2 drehbeweglich ist und als Blende ausgebildet ist.

Der Ablenkspiegel 2 ist kreisförmig und in vier Kreissegmente aufgeteilt, von denen zwei als Spiegelflächen 2a,2b und zwei als Fenster 2c,2d ausgebildet sind. Die Spiegelflächen 2a,2b und die Fenster 2c,2d sind von einer Fassung 2e umgeben, die in einem Rahmen 4 mit einer Lagerung 5 drehbar gelagert ist. Zwischen der Fassung 2e und dem Rahmen 4 ist ein Drehantrieb 6 wirksam, der nach Art eines Motors ausgebildet sein kann, wobei dann die Fassung 2e den Motor mit Wicklung und der Rahmen 4 den Stator mit Wicklung umfaßt.

Der Rahmen 4 ist an seinem unteren Rand in einem Schwenklager 7 gelagert und mit seinem anderen Rand an einem einstellbaren Anschlag 8 abgestützt. Mittels eines an den Rahmen 4 angreifenden Stellgliedes 9 läßt sich der Rahmen 4 mit dem drehbaren Ablenkspiegel 2 aus der in der Zeichnung dargestellten Position in eine in der Zeichnung durch einen Pfeil P angedeutete vertikale Position verschwenken. Der einfallende ursprüngliche Strahl/Vollstrahl A wird in diesem Fall nicht unterteilt, was in einem speziellen Anwendungsfall gewünscht sein kann.

Die Funktionsweise des beschriebenen Strahlteilers ist folgende: Der vollflächige Strahl A trifft zunächst auf den Ablenkspiegel 2. Da der Ablenkspiegel 2 keine volle Spiegelfläche hat, sondern nur zwei segmentartige Spiegelflächen 2a,2b, werden nur zwei Strahlen B abgelenkt, deren Querschnitte den segmentartigen Spiegelflächen 2a,2b entsprechen, während die übrigen Teilstrahlen durch die Fenster 2c,2d auf den nachfolgenden Ablenkspiegel 3 auftreffen und von diesem dann als Teilstrahlen C abgelenkt werden. Da die beiden Ablenkspiegel 2,3 gleich orientiert, d.h. parallel zueinander angeordnet sind, treten aus dem Gehäuse 1 zwei parallele Teilstrahlen B,C aus. Die parallele Lage der Teilstrahlen B,C ist aber nicht stationär, sondern verlagert sich im Kreis, weil aufgrund der Rotation des Ablenkspiegels 2 der ausgeblendete Teil und der durchgelassene Teil ständig verlagert werden. Im Ergebnis überstreichen damit die Teilstrahlen B,C eine Fläche, die im Querschnitt gleich der Fläche des Vollstrahles A ist. Der einzige Unterschied zum Vollstrahl besteht darin, daß die Intensität der Teilstrahlen B,C geringer ist: Bei gleichen Flächenanteilen der Spiegelflächen 2a,2b und der Fenster 2c,2d ist die Intensität beider Teilstrahlen B,C halb so groß.

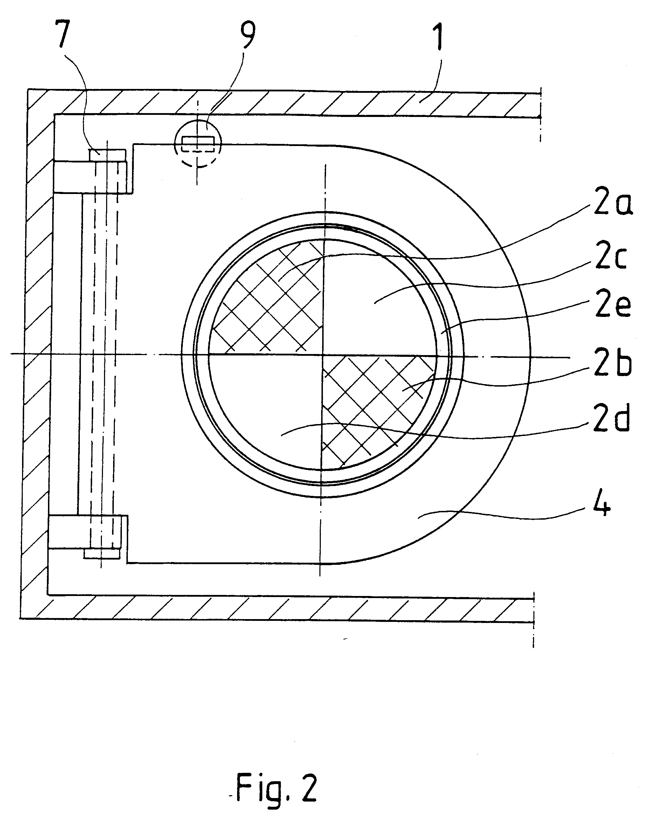

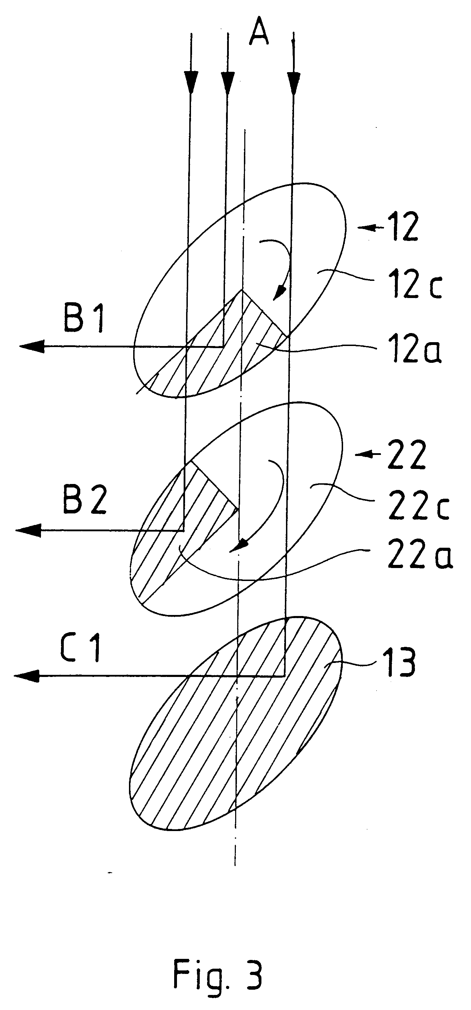

Das Ausführungsbeispiel der Figur 3 unterscheidet sich von dem der Figuren 1 und 2 im wesentlichen nur darin, daß mittels eines dritten Ablenkspiegels 13 der Vollstrahl in drei Teilstrahlen B1,B2,C1 aufgeteilt wird. Dies ist möglich, wenn ein erster und ein zweiter Ablenkspiegel 12,22 synchron rotieren und ihre Spiegelflächen 12a,22a und Fenster 12c,22c zueinander derart angeordnet sind, daß durch das Fenster 12c des ersten Ablenkspiegels 12 ein Teilstrahl auf die Spiegelfläche 22a des zweiten Ablenkspiegels 22 und sowohl durch das Fenster 12c des ersten Ablenkspiegels 12 als auch durch das Fenster 22c des zweiten Ablenkspiegels 22 ein Teilstrahl auf den letzten Ablenkspiegel 13 fällt. Dabei ist es unerheblich, ob der letzte Ablenkspiegel 13 vollflächig und stationär oder synchron mitlaufend und mit einer voll- oder teilflächigen Spiegelfläche ausgebildet ist, auf die der durch die Fenster 12c und 22c des ersten und zweiten Ablenkspiegels 12,22 fallenden Teilstrahl fällt. Der letzte Ablenkspiegel 13 sorgt in jedem Fall dafür, daß auch der dritte Teilstrahl C1 zu den anderen Teilstrahlen B1,B2 parallel gerichtet ist.

## Patentansprüche

1. Optischer Strahlteiler, insbesondere für einen Laserstrahl (A), mit einem im Strahlengang angeordneten, als Blende ausgebildeten Ablenkspiegel (2,12), der um eine senkrecht zu seiner Spiegelebene liegende Achse drehbar ist und den Querschnitt des Strahls (A) erfaßt,
**dadurch gekennzeichnet**, daß der Ablenkspiegel (2,12) mindestens ein Fenster (2c,2d,12c) aufweist, das nur ein Segment des gesamten Querschnitts des Strahls (A) überdeckt und das bei Drehung des Ablenkspiegels (2,12) sämtliche Segmente des Strahls (A) nacheinander überstreicht.

2. Strahlteiler nach Anspruch 1,
**dadurch gekennzeichnet**, daß ein im Strahlengang angeordneter letzter Ablenkspiegel (3,13) vollflächig und stationär ausgebildet ist.

3. Strahlteiler nach Anspruch 2,
**dadurch gekennzeichnet**, daß der letzte Ablenkspiegel (3,13) parallel zu dem vorgeordneten Ablenkspiegel (2,12) angeordnet ist.

4. Strahlteiler nach einem der Ansprüche 1 bis 3,
**dadurch gekennzeichnet**, daß der drehbare Ablenkspiegel (2) mehrere symmetrisch um die Drehachse herum verteilte Spiegelflächen (2a,2b) aufweist.

5. Strahlteiler nach Anspruch 4,
**dadurch gekennzeichnet**, daß jede Spiegelfläche (2a,2b) und jedes Fenster (2c,2d) als ein von der Drehachse radial ausgehendes Segment ausgebildet ist.

6. Strahlteiler nach einem der Ansprüche 1 bis 5,
**dadurch gekennzeichnet**, daß im Strahlengang mindestens ein weiterer gleichartiger, synchron mit dem ersten Ablenkspiegel (12) drehbarer Ablenkspiegel (12) angeordnet ist, dessen zumindest eine Spiegelfläche (22a) und dessen zumindest ein Fenster (22c) mit jedem im Strahlengang vorgeordneten Fenster (12c) des ersten Ablenkspiegels (12) fluchten.
